# FASCICULE DE BREVET EUROPEEN

(11) **EP 1 657 465 B1**
(45) Date de publication et mention de la délivrance du brevet: **15.01.2014**
(21) Numéro de dépôt: 05021693.6
(22) Date de dépôt: 05.10.2005
(51) Int. Cl.: F16D 65/097, F16D 55/22

(54) **Elément de découplage destiné à être interposé entre un piston de frein à disque et un élément de friction**
Entkopplungselement zum Positionieren zwischen einem Bremsbacken und einem Bremskolben einer Scheibenbremse
Decoupling element to be interposed between a piston and a friction element of a disc brake

(30) Priorité: 10.11.2004 FR 0411989
(43) Date de publication de la demande: 17.05.2006
(73) Titulaire: Chassis Brakes International B.V., 1011 VM Amsterdam (NL)
(72) Inventeur: Champion, Pascal, 49240 Avrille (FR); Plessis, David, 49480 St Sylvain d'Anjou (FR); Moreau, Eric, 49124 Saint Barthelemy d'Anjou (FR); Prades, Xavier, 49125 Tierce (FR); Vinck, Jan, 49250 Beaufort en Vallée (FR)
(74) Mandataire: Hurwic, Aleksander Wiktor

(56) Documents cités:
- EP-A- 1 455 109
- US-A- 4 995 482
- US-A- 5 842 546
- PATENT ABSTRACTS OF JAPAN vol. 008, no. 054 (M-282), 10 mars 1984 (1984-03-10) & JP 58 207535 A (NISSAN JIDOSHA KK), 3 décembre 1983 (1983-12-03)

## Description

La présente invention se rapporte principalement à un élément de découplage destiné à être interposé entre un piston de frein à disque et un patin de frein à disque, un patin de friction comportant un tel élément de découplage et un frein à disque comportant un tel patin de friction.

Il existe de nombreux exemples de freins à disque, en particulier le frein à disque coulissant comportant un étrier monté coulissant par rapport à une chape fixée à un porte fusée d'un véhicule automobile. Le frein à disque comporte également un piston monté coulissant dans l'étrier et destiné à déplacer en direction d'un disque de frein une première plaquette de freins. De manière connue, le piston pneumatique est déplacé par un fluide hydraulique sous pression provenant d'un circuit de freinage commandé par le conducteur du véhicule automobile. Lorsque la première plaquette de frein vient en appui contre une première face d'un disque de frein lié en rotation au moyeu du véhicule automobile, l'étrier par réaction coulisse par rapport à la chape et vient appliquer une deuxième plaquette de frein contre une deuxième face du disque de frein. On s'est rendu compte que les freins à disque sont susceptibles lors d'une phase de freinage de générer du bruit, qui d'une part est gênant pour le confort du conducteur et des passagers du véhicule et qui d'autre part est susceptible de faire craindre au conducteur automobile un dysfonctionnement du système de freinage alors que celui-ci fonctionne de manière tout à fait satisfaisante.

Il existe donc une recherche importante sur les freins à disque afin de les rendre plus silencieux **voire notamment** US-A-5842546**,** JP 58207535**,** US 4995 482 **et** EP 1 455109**.**

Il est connu, d'une part afin de réduire ou de supprimer les bruits éventuels susceptibles d'apparaître lors d'une phase de freinage, de disposer entre un nez de piston, partie du piston en appui contre la plaquette de frein, et l'arrière de la plaquette de frein, un élément amortisseur qui est fixé sur la plaquette de frein.

Cet élément amortisseur est composé d'un matériau multicouches comportant une couche de caoutchouc, une couche en général de tôle en acier inoxydable et une deuxième couche de caoutchouc, ainsi le nez de piston est en appui contre la plaquette par l'intermédiaire de cet élément amortisseur et vient en contact de la deuxième couche de caoutchouc.

D'autre part, le piston de frein à disque est généralement réalisé en acier. Or, il a été observé qu'en phase de freinage et après un certain nombre d'applications, le nez d'étrier vient déchirer la deuxième couche de caoutchouc et vient directement en contact de la tôle d'acier inoxydable. L'élément amortisseur perd alors en partie ses qualités d'amortissement. Il y a alors un risque que le frein à disque devienne moins silencieux et génère alors des bruits.

De plus, il a été constaté que lors de phases de freinage, il arrive que le piston et la plaquette soient liés l'un à l'autre. Et dans le cas où le piston a une position décalée par rapport à son axe de coulissement, le frein à disque génère un bruit. Cette liaison entre la plaquette et le piston est d'autant plus fréquente que l'élément amortisseur est dégradé. En effet, dans ce cas le nez de piston pénètre la deuxième couche de caoutchouc et vient s'ancrer dans l'élément amortisseur.

C'est par conséquent, un but de la présente invention d'offrir un frein à disque offrant un fonctionnement silencieux.

C'est également un but de la présente invention d'offrir un frein à disque de fonctionnement amélioré.

C'est également un but de la présente invention d'offrir des plaquettes de frein permettant un frein à disque silencieux.

Ces buts sont atteints par une plaquette de freins comportant un moyen destiné à recevoir l'appui du nez de piston et à permettre un mouvement relatif entre la plaquette de freins et le piston.

En d'autres termes, on fixe sur la plaquette de frein un élément en matériau sur lequel le nez de piston va glisser et permettre ainsi le glissement du nez de piston par rapport à la plaquette. Ceci permet avantageusement de protéger l'élément amortisseur puisque le nez de piston va venir en appui sur l'élément de protection et de glissement, évitant ainsi toute détérioration de l'élément amortisseur.

**La présente invention a pour objet un élément de découplage tel que revendiqué dans les revendications.**

La présente invention sera mieux comprise à l'aide de la description qui va suivre et des figures annexes sur lesquelles le haut et la bas correspondent respectivement à la partie supérieure et à la partie inférieure des dessins sur lesquels :
- La figure 1 est une vue en coupe axial d'un frein à disque selon la présente invention ;
- La figure 2 a est une vue de trois quart d'un premier exemple d'un premier mode de réalisation d'un élément de friction et d'un élément de découplage selon la présente invention représentés séparés l'un de l'autre ;
- La figure 2b est une vue de trois quart des éléments de la figures 2a, dans une position assemblée ;
- La figure 2c est une vue de face d'un élément de friction selon le premier exemple du premier mode de réalisation pour un frein droit ;
- La figure 3a est une vue de face d'un deuxième exemple du premier mode de réalisation d'un élément de friction selon la présente invention ;
- La figure 3b est une vue de face d'un élément de découplage du deuxième exemple de réalisation ;
- La figure 3c est une vue de face représentant les éléments des figures 3a et 3b assemblés ;
- La figure 4a est une vue de face d'un premier exemple d'un deuxième mode de réalisation d'un élément de friction selon la présente invention ;
- La figure 4b est une vue de face d'un élément de découplage d'un premier exemple de réalisation ;
- La figure 4c est une vue de face représentant les éléments des figures 4a et 4b assemblés ;
- La figure 5a est une vue de face d'un deuxième exemple du deuxième mode de réalisation d'un élément de friction de selon la présente invention ;
- La figure 5b est une vue de face d'un élément de découplage d'un deuxième exemple de réalisation ;
- La figure 5c est une vue de face représentant les éléments des figures 4a et 4b assemblés

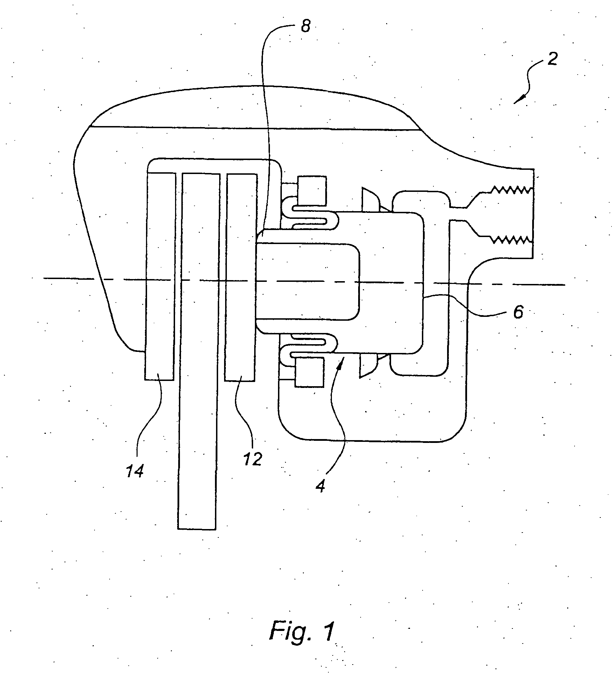

Sur la figure 1 on peut voir un frein à disque selon la présente invention comportant un étrier dans lequel est monté à coulissement étanche un piston hydraulique 4, le piston 4 comportant un fonds 6 contre lequel le liquide de frein sous pression vient s'appliquer et un nez de piston 8 axialement opposé au fonds du piston qui vient en appui d'une plaque support d'un élément de friction.

Le piston est par exemple réalisé en acier, mais il est bien entendu que l'on peut prévoir d'autres matériaux par exemple un alliage d'aluminium.

Dans l'exemple représenté, il s'agit d'un frein à disque coulissant, mais il est bien entendu que la présente invention s'applique également à un frein à disque de type fixe. L'étrier 2 est destiné à coulisser par rapport à une chape (non représentée) destinée à être fixée sur le porte fusée d'un véhicule automobile. Le frein à disque comporte une première plaquette intérieure 12 et une deuxième plaquette extérieure 14. La première et la deuxième plaquettes comportent respectivement une plaque support 16, 18 et un matériau de friction 20, 22 fixé par exemple par collage sur la plaque support.

Nous allons désormais décrire uniquement la plaquette intérieure 12 qui comporte un moyen de découplage entre l'élément de friction et le nez de piston selon la présente invention. Il est bien entendu que dans le cas d'un frein fixe comportant un premier et un deuxième pistons destinés à appliquer respectivement la plaquette intérieure et la plaquette extérieure contre les faces d'un disque de frein, chacune des plaquettes intérieure et extérieure comporte ledit moyen de découplage.

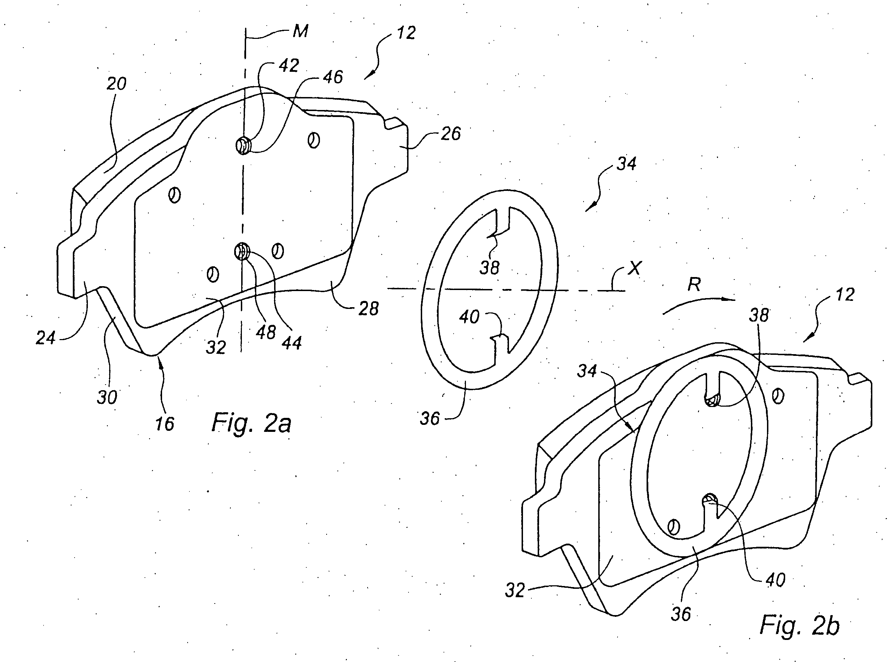

Sur les figures 2a et 2b, on peut voir une plaquette de friction 12 ayant sensiblement la forme d'une portion d'anneaux munie à une première et deuxième extrémités d'oreilles 24, 26, destinées à coulisser dans des glissières non représentées de la chape.

La plaquette de friction 12 comporte également un élément amortisseur fixé par exemple par collage sur la plaque support 16 du côté 28 opposé au côté 30 sur lequel est collé le matériau de friction

L'élément amortisseur 32 est avantageusement composé d'une âme en tôle réalisée en acier inoxydable sur laquelle est disposée de part et d'autre de cette âme une couche d'élastomère par exemple de caoutchouc.

Selon la présente invention, de manière à éviter un couplage transversal entre le piston du frein à disque par l'intermédiaire du nez de piston et la plaquette de frein 12, il est prévu de disposer entre le nez de piston et la plaquette de frein 12 un élément de découplage 34 fixé sur la plaque support 16.

L'élément de découplage 34 s'interpose entre le nez de piston et le moyen d'amortissement 32 de manière à permettre un glissement du nez de piston sur l'amortisseur.

L'élément de découplage est réalisé dans un matériau ayant le coefficient de friction µ entre le nez de piston et le moyen de découplage est inférieur au coefficient de friction entre le nez de piston et le moyen amortisseur 32. Par exemple le moyen de découplage 34 est réalisé en acier, avantageusement en acier inoxydable de manière à éviter toute corrosion de celui-ci du fait de l'environnement dans lequel le frein va être utilisé.

Le moyen de découplage 34 a sensiblement la forme du nez de piston. De manière usuelle, le nez de piston est formé par une surface annulaire, par conséquent, de manière avantageuse, le moyen de découplage 34 est de forme annulaire de diamètre intérieur, extérieur correspondant sensiblement au diamètre intérieur/extérieur du nez de piston.

Dans l'exemple représenté, le moyen de découplage 34 est évidé de manière à ne former qu'une couronne venant s'interposer spécifiquement contre la couronne formée par le nez de piston et le moyen d'amortissement. Cependant, on réalise de manière avantageuse un évidemment du moyen de découplage de manière à réduire la masse dudit moyen de découplage et par conséquent, la masse du frein.

Le moyen de découplage 34 comporte un anneau 36 et des moyens de solidarisation à la plaquette de frein. Selon le premier exemple de réalisation représenté aux figures 2a et 2b, le moyen de découplage 34 comporte une première et une deuxième pattes 38,40 venues de matière avec la couronne et destinée à venir pénétrer dans des cavités 42, 44 pratiquées dans la plaque support, des orifices 46, 48 correspondants étant pratiqués dans l'élément d'amortissement 32. Les pattes 38 et 40 sont dans l'exemple représenté, repliées à angle droit par rapport au plan de la couronne. Les languettes 38 et 40 sont sensiblement élastiques et de dimensions transversales sensiblement égales à celles des orifices 42 et 44 de manière à permettre un montage par couplage élastique entre l'élément de découplage et la plaquette de frein.

De manière avantageuse, les cavités 42 et 44 sont pratiquées sur un axe médian M de la plaquette de freins.

Il est prévu dans certains cas d'avoir un frein à disque destiné à être disposé sur le côté gauche du véhicule différent du frein à disque destiné à être disposé sur le côté droit du véhicule. En effet, de manière à améliorer les performances du frein, il est souvent prévu de réaliser un décalage entre l'axe de coulissement du piston et l'axe de coulissement de la plaquette de frein de manière à réaliser un décalage vers l'avant de l'appui du piston sur la plaquette de frein dans le sens de rotation du disque de freins représenté par la flèche R.

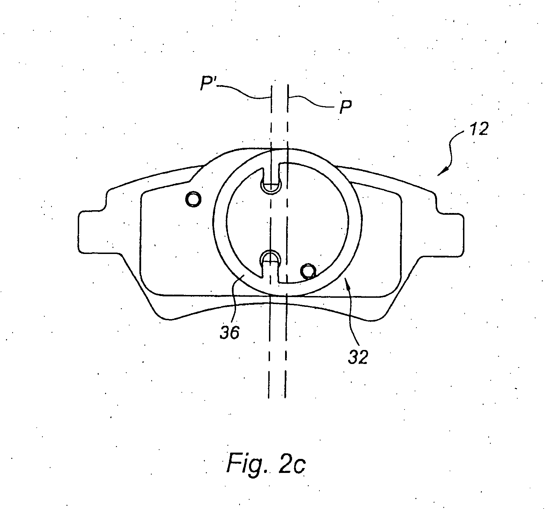

Par conséquent, il est prévu d'avoir un moyen de découplage 34 pour le frein droit et pour le frein gauche. Ainsi, si l'on considère un plan de symétrie P (figure 2c) de la couronne 36, il est prévu que le plan P' contenant les languettes 38 et 40 ne soit pas confondu avec le plan de symétrie P, la distance séparant P et P' étant déterminée en fonction du décalage entre l'axe de coulissement du piston et l'axe de coulissement de la plaquette de friction. Le plan P contient l'axe de la couronne 36.

Il est bien entendu que l'on pourrait prévoir de décaler les cavités 42,44 par rapport au plan médian M et d'utiliser un seul type d'élément de découplage afin de réaliser le décalage nécessaire entre la frein gauche et le frein droit.

Il peut être prévu de manière avantageuse d'appliquer un adhésif sur la face de la couronne destinée à venir en contact du moyen d'amortissement 32.

Cet exemple de réalisation du moyen de découplage a pour avantage de permettre d'utiliser le même moyen de découplage pour la plaquette devant équiper le frein gauche (figure 2b) et la plaquette devant équiper le frein droit (figure 2c), l'adaptation au frein gauche ou au frein droit se faisant uniquement en retournant d'un angle de 180° autour de l'axe X de la couronne de manière à toujours placer le plan P en avant du plan P' dans le sens de rotation R.

Cependant, cet exemple de réalisation nécessite une attention particulière pour le sens de montage des moyens de découplage.

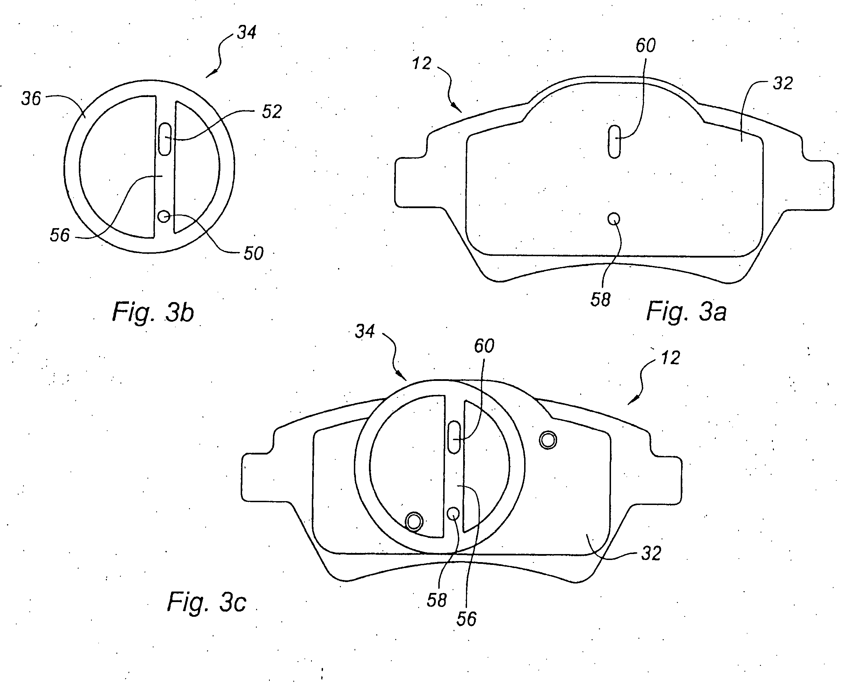

Sur les figures 3a,3b et 3c, on peut voir un deuxième exemple de réalisation du premier mode de réalisation, sur lequel le moyen de découplage 34 diffère du moyen de découplage du premier exemple de réalisation en ce que les moyens de fixation du moyen de découplage comportent un premier et deuxième orifices destinés à recevoir un premier et deuxième ergots venant en saillie de plaque support et du moyen d'amortissement. Les orifices 50, 52 sont réalisés dans l'exemple représenté dans une bande venue de matière avec la couronne 36 et reliant deux parties de la périphérie intérieure 54 de la couronne opposées par rapport à un plan de symétrie. Les orifices 50, 52 sont pratiqués dans la bande 56 de part et d'autre d'un plan de symétrie du moyen de découplage. De manière avantageuse, on peut prévoir un premier et un deuxième orifices 50 et 52 de formes différentes afin de former des moyens de détrempage lors du montage du moyen de découplage sur la plaquette.

Dans l'exemple représenté, l'orifice 50 est de forme circulaire, tandis que l'orifice 52 est de forme oblongue, les ergots 58, 60 sont respectivement de forme circulaire et de forme oblongue. L'exemple représenté est une plaquette de freins pour un frein droit avec un moyen de découplage associé. La plaquette de frein pour le frein gauche comporterait un orifice circulaire en haut, un orifice oblongue en bas. Ainsi, il n'y a aucun risque de monter le moyen de découplage de manière erronée. Il est bien entendu que toute autre forme est utilisable, par exemple des formes parallélépipédique.

Les ergots de formes différentes sont également de manière avantageuse utilisés pour le montage de l'élément amortisseur qui n'est pas symétrique par rapport à un plan horizontal et qui nécessite donc une orientation.

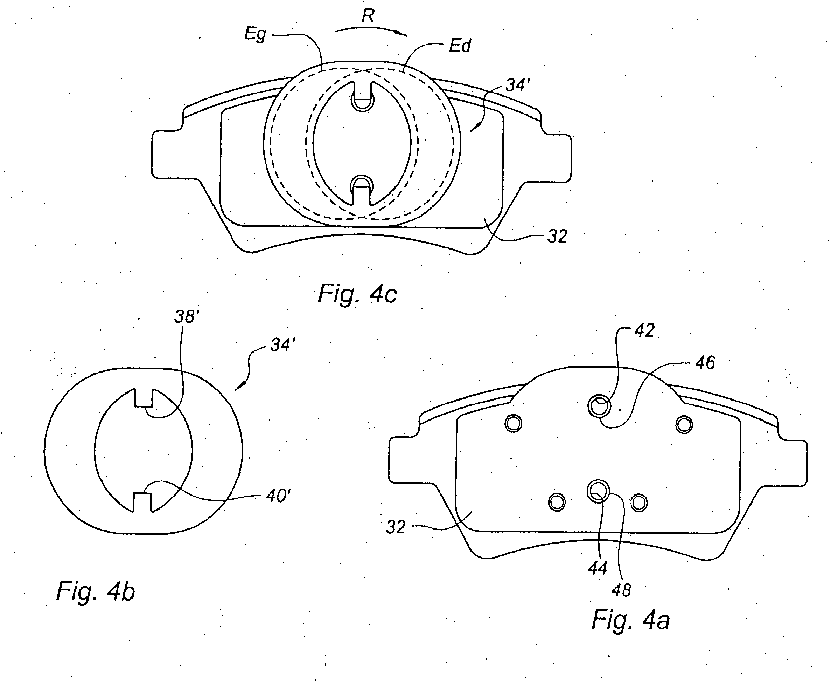

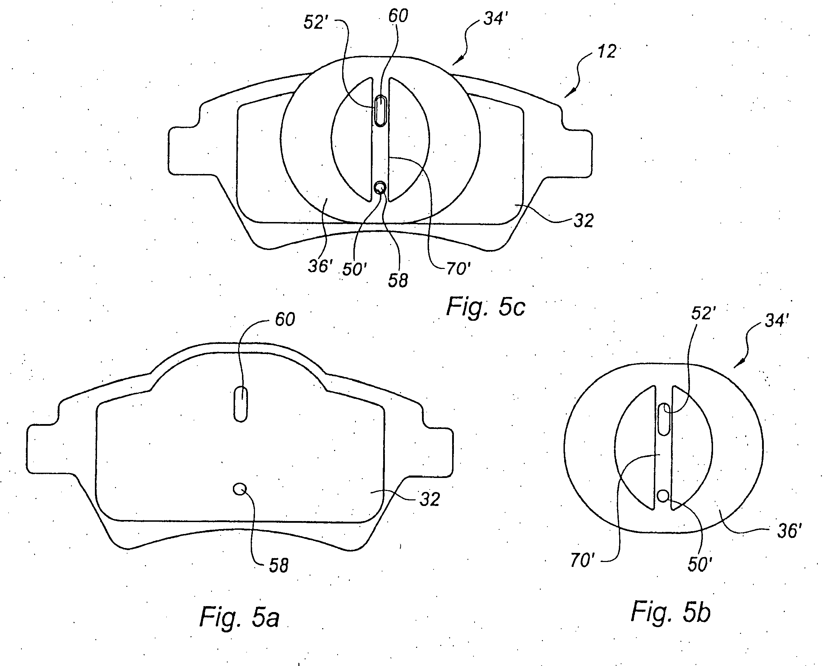

Sur les figures 4a à 4c et les figures 5a à 5c, on peut voir un deuxième mode de réalisation d'un moyen de découplage 34' diffèrent du premier mode de réalisation en ce qu'il n'est pas nécessaire d'effectuer une rotation de 180° autour de l'axe X de la couronne du moyen de découplage entre le montage sur la plaquette de freins destinée au frein gauche et la plaquette de frein destinée au frein droit.

Selon le deuxième mode de réalisation représenté en figure 4, le moyen de découplage est de forme sensiblement ellipsoïdale de manière à contenir les positions d'appui transversales extrêmes respectives du piston du frein gauche et du piston du frein droit.

Sur la figure 4c, on peut voir représentées en traits interrompus les positions extrêmes des pistons pour le frein gauche et pour le frein droit.

La présente invention selon ce mode de réalisation a pour avantage de permettre un montage sans contrôle de la position du moyen de découplage sur une plaquette destinée au frein gauche et une plaquette destinée au frein droit ; par conséquent, il n'y a aucun risque d'avoir un montage d'une plaquette munie d'un moyen de découplage monté pour un frein gauche alors que la plaquette est disposée dans un frein droit. Cependant, ce moyen de découplage nécessite l'utilisation de plus de matières et donc augmente le poids total du frein dans lequel il est monté.

Dans le premier exemple de réalisation représenté sur les figures 4b et 4c, les moyens de découplage 34' comportent des languettes 38',40' destinées à venir coopérer de manière élastique dans des cavités 42,44 pratiquées dans la plaque support 16 de la plaquette de frein, tel que décrit précédemment.

Sur les figure 5b et 5c, dans le deuxième exemple de réalisation, l'accrochage se fait par l'intermédiaire d'ergots 58, 60 en saillie de la plaque support 16 et coopérant avec des orifices 50',52' pratiqués dans une bande 70' cette fois-ci contenue dans un plan de symétrie du moyen de découplage.

Il est bien entendu qu'on peut également prévoir d'associer à ces moyens de fixation un adhésif disposé sur la face du moyen de couplage destiné à venir en contact de la plaque support ou du moyen d'amortissement.

Il est bien entendu que les pattes peuvent être portées par la plaque support et les cavités par l'élément de découplage. De même les ergots peuvent venir de matière avec l'élément de découplage et des cavités de réception peuvent être prévues dans la plaque support.

Il est bien entendu également que la présente invention se rapporte également à des plaquettes de frein ne comportant pas de moyens d'amortissement, et dans ce cas le moyen de découplage est directement en contact avec la plaque support.

Il est bien entendu que le moyen de découplage peut être réalisé en tout matériau, dont le coefficient de frottement avec le nez de piston est inférieur au coefficient de frottement entre la plaque support le nez de piston ou l'élément d'amortissement et le nez de piston.

Il est bien entendu que l'on pourrait prévoir de réaliser l'élément de découplage d'une seule pièce avec l'élément amortisseur. Par exemple, un anneau de tôle en acier inoxydable serait recouvert sur une face d'une couche d'élastomère destinée à venir en contact de la plaque support, ce qui aurait pour avantage de faciliter le montage puisqu'une seule pièce serait alors montée sur la plaque support.

La présente invention s'applique notamment aux freins à disque pour véhicules automobiles.

La présente invention s'applique principalement aux freins à disque pour voitures particulières.

## Revendications

1. Elément de découplage destiné à être interposé entre une face d'appui d'une plaque support (16) d'un élément de friction et un piston (4) de frein à disque pour permettre un déplacement relatif du piston (4) par rapport à la plaque support (16) ledit élément de découplage est destiné à être solidarisé à la plaque support(16) **caractérisé en ce qu'**il a sensiblement la forme d'un anneau de dimension tel qu'il recouvre une extrémité du piston destiné à venir en contact de la plaque support (16)

2. Elément de découplage selon la revendication 1 **caractérisé en ce qu'**il comporte au moins une première et une deuxième pattes (38,40) destinées à pénétrer dans une première et deuxième cavités (42,44) pratiquées dans l'axe médian de la plaque support (16) de manière à maintenir le moyen de découplage sur la plaque support(16).

3. Elément de découplage selon la revendication 1 ou 2 **caractérisé en ce qu'**il est de forme sensiblement ellipsoïdale.

4. Elément de découplage **selon l'une quelconque des revendications précédentes caractérisé en ce qu'**il comporte une bande (56) venue de matière avec l'anneau (36) et raccordant deux parties de la périphérie interne de l'anneau (36) diamétralement opposées **en ce qu'il présente une symétrie par rapport à un plan P, en ce qu'il comporte des** moyens de fixation dudit élément **situé dans un plan P' situé à une distance non nulle du plan P.**

5. Elément de découplage selon la revendication précédente **caractérisé en ce que** les orifices (50,52) sont pratiqués dans le moyen de découplage et **en ce que** les ergots pratiqués dans l'axe médian (58, 60) sont en saillie de la face d'appui de la plaque support (16).

6. Elément de découplage selon l'une quelconque des revendications précédentes **caractérisé en ce qu'**il est réalisé en **tôle d'acier inoxydable.**

7. Elément de découplage selon l'une des revendications précédentes **caractérisé en ce qu'**il comporte également une couche de matériau amortisseur destinée à venir en appui contre la face d'appui de la plaque support de manière à ce qu'il forme également un élément d'amortissement.

## Patentansprüche

1. Entkopplungselement, das dazu bestimmt ist, zwischen einer Auflageseite einer Tragplatte (16) eines Reibungselements und einem Kolben (4) einer Scheibenbremse eingefügt zu werden, um eine relative Verschiebung des Kolbens (4) bezüglich der Tragplatte (16) zu erlauben, wobei das Entkopplungselement dazu bestimmt ist, fest mit der Tragplatte (16) verbunden zu werden, **dadurch gekennzeichnet, dass** es im Wesentlichen die Form eines Rings mit einer solchen Abmessung hat, dass es ein Ende des Kolbens bedeckt, der dazu bestimmt ist, mit der Tragplatte (16) in Kontakt zu kommen.

2. Entkopplungselement nach Anspruch 1, **dadurch gekennzeichnet, dass** es mindestens eine erste und eine zweite Lasche (38, 40) aufweist, die dazu bestimmt sind, in einen ersten und einen zweiten Hohlraum (42, 44) einzudringen, die in der Mittelachse der Tragplatte (16) angebracht sind, um die Entkopplungseinrichtung auf der Tragplatte (16) zu halten.

3. Entkopplungselement nach Anspruch 1 oder 2, **dadurch gekennzeichnet, dass** es eine im Wesentlichen elliptische Form hat.

4. Entkopplungselement nach einem der vorhergehenden Ansprüche, **dadurch gekennzeichnet, dass** es ein Band (56) aufweist, das aus einem Stück mit dem Ring (36) besteht und zwei diametral entgegengesetzte Teile des Innenumfangs des Rings (36) verbindet, dass es eine Symmetrie bezüglich einer Ebene P aufweist, dass es Einrichtungen zur Befestigung des Elements aufweist, das sich in einer Ebene P' befindet, die sich in einem Abstand ungleich Null von der Ebene P befindet.

5. Entkopplungselement nach dem vorhergehenden Anspruch, **dadurch gekennzeichnet, dass** die Öffnungen (50, 52) in der Entkopplungseinrichtung angebracht sind, und dass die in der Mittelachse (58, 60) angebrachten Nocken von der Auflagefläche der Tragplatte (16) vorstehen.

6. Entkopplungselement nach einem der vorhergehenden Ansprüche, **dadurch gekennzeichnet, dass** es aus rostfreiem Stahlblech besteht.

7. Entkopplungselement nach einem der vorhergehenden Ansprüche, **dadurch gekennzeichnet, dass** es ebenfalls eine Schicht von Dämpfungsmaterial aufweist, die dazu bestimmt ist, sich gegen die Auflagefläche der Tragplatte anzulegen, damit es ebenfalls ein Dämpfungselement bildet.

## Claims

1. Decoupling element intended to be interposed between a bearing face of a support plate (16) of a friction element and a piston (4) of a disc brake in order to allow a relative movement of the piston (4) with respect to the support plate (16), the said decoupling element being intended to be secured to the support plate (16), **characterized in that** it has substantially the shape of a ring whose dimension is such that it covers one end of the piston intended to come into contact with the support plate (16).

2. Decoupling element according to Claim 1, **characterized in that** it comprises at least a first and a second tab (38, 40) intended to penetrate into a first and second cavity (42, 44) formed in the median axis of the support plate (16) so as to maintain the decoupling means on the support plate (16).

3. Decoupling element according to Claim 1 or 2, **characterized in that** it is of substantially ellipsoidal shape.

4. Decoupling element according to any one of the preceding claims, **characterized in that** it comprises a strip (56) integrally formed with the ring (36) and connecting two diametrically opposed parts of the internal periphery of the ring (36), **in that** it has a symmetry with respect to a plane P, and **in that** it comprises means for fixing the said element situated in a plane P' situated at a non-zero distance from the plane P.

5. Decoupling element according to the preceding claim, **characterized in that** the orifices (50, 52) are formed in the decoupling means, and **in that** the lugs (58, 60) formed in the median axis project from the bearing face of the support plate (16).

6. Decoupling element according to any one of the preceding claims, **characterized in that** it is produced from a stainless steel sheet.

7. Decoupling element according to one of the preceding claims, **characterized in that** it also comprises a layer of damper material intended to bear against the bearing face of the support plate in such a way that it also forms a damping element.
